# EUROPEAN PATENT APPLICATION

(11) **EP 1 808 715 A2**
(43) Date of publication of application: **18.07.2007**
(21) Application number: 07000190.4
(22) Date of filing: 05.01.2007
(51) Int. Cl.: G02B 5/02

(54) **Multilayered light diffuser plate**

(30) Priority: 06.01.2006 JP 2006001197; 03.03.2006 JP 2006057628
(71) Applicant: Sumitomo Chemical Company, Limited, Tokyo 104-8260 (JP)
(72) Inventor: Iyama, Hironobu, Niihama-shi, Ehime-ken (JP)
(74) Representative: Vossius & Partner

(57) **Abstract**

A multilayered light diffuser plate having a light diffusing layer made of a transparent resin selected from the group consisting of styrene polymers and styrene monomer-methyl methacrylate copolymers containing a light diffusing agent dispersed therein, and a UV absorbing layer made of a styrene monomer-methyl methacrylate copolymer containing 0.05 to 10 parts by weight of at least one UV absorbing agent selected from the group consisting of a UV absorbing agents represented by the formula (1) and a UV absorbing agents represented by the formula (2) per 100 parts by weight of the styrene monomer-methyl methacrylate copolymer:

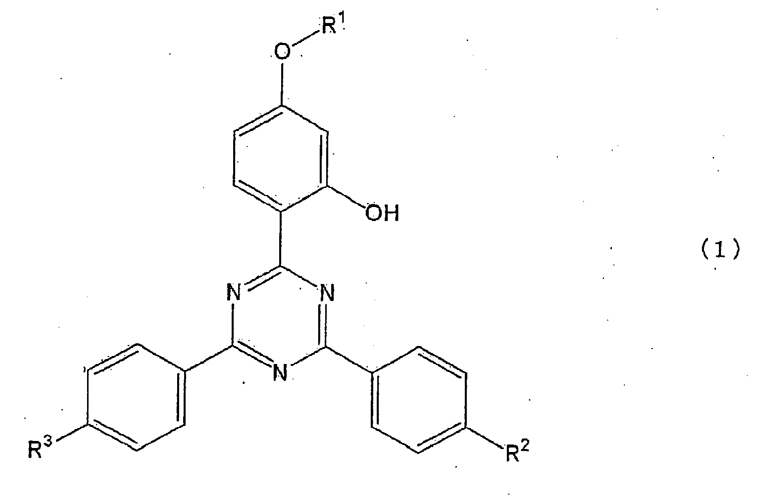

## Description

The present invention relates to a multilayered light diffuser plate. In particular, the present invention relates to a light diffuser plate having a multilayered structure used in a backlight unit constituting a direct backlight liquid crystal display (LCD), and so on.

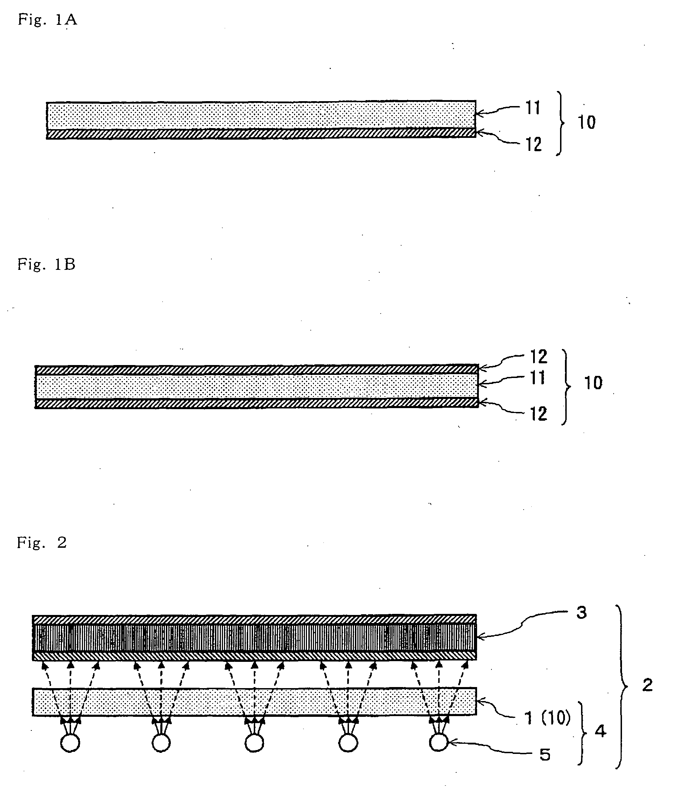

As shown in Fig. 2, a direct backlight LCD 2 comprises a liquid crystal cell 3 and a backlight unit 4 provided directly beneath the liquid crystal cell 3. One example of the widely used backlight unit 4 comprises a plurality of cold cathode fluorescent lamps (CCFLs) 5 as light sources and a light diffuser plate 1 disposed in front of the light sources.

The cold cathode fluorescent lamps 5 with a larger size have been gradually used in accordance with the increase of a screen size of LCD; and consequently the amount of UV light emitted from the cold cathode fluorescent lamps 5 has also been increased, so that the light diffuser plate 1 is easily colored due to the degradation of the plate 1.

JP-A 2005-234521 discloses, as the light diffuser plate 1 which is hardly degraded with UV light, a multilayered light diffuser plate 10 comprising a laminate of a light diffusing layer 11 containing a light diffusing agent and a UV absorbing layer 12 containing a UV absorbing agent.

However, it is desirable that degradation of the light diffuser plate 1 with UV light is further reduced.

An object of the present invention is to provide a light diffuser plate which suffers from less degradation caused by UV light.

Accordingly, the present invention provides a multilayered light diffuser plate comprising a light diffusing layer made of at least one transparent resin selected from the group consisting of styrene polymers and styrene monomer-methyl methacrylate copolymers containing a light diffusing agent dispersed therein, and a UV absorbing layer made of a styrene monomer-methyl methacrylate copolymer containing 0.05 to 10 parts by weight of at least one UV absorbing agent selected from the group consisting of a UV absorbing agents represented by the formula (1) and a UV absorbing agents represented by the formula (2) per 100 parts by weight of the styrene monomer-methyl methacrylate copolymer: 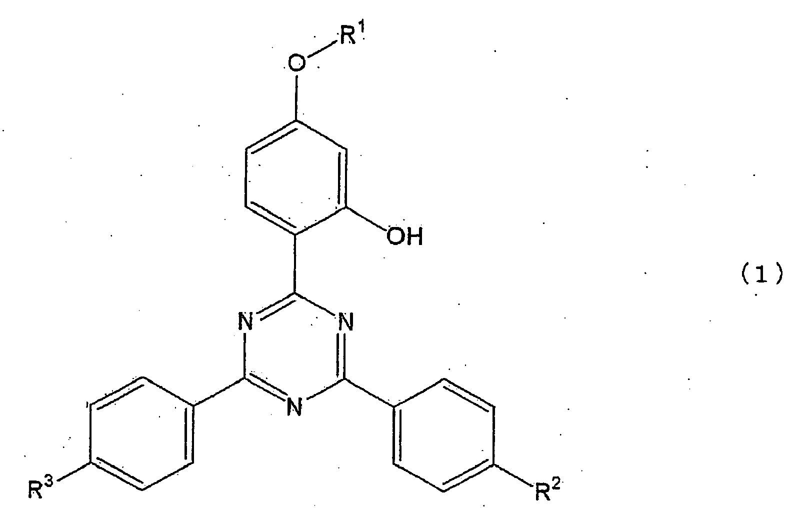 wherein R¹ represents an alkyl group having 10 or less carbon atoms, and R² and R³ represent independently of each other a hydrogen atom, a tert-butyl group, a tert-octyl group or a phenyl group; and 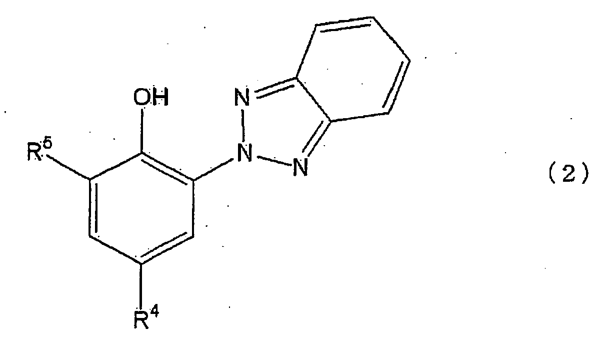 wherein R⁴ represents a methyl group, a tert-octyl group or a substituent represented by the formula (2-1): 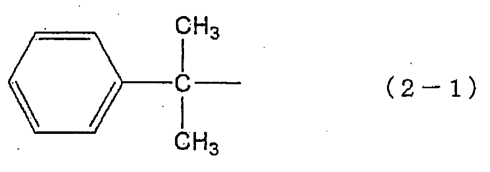
R⁵ represents a tert-octyl group, a substituent represented by the formula (2-1), a substituent represented by the formula (2-2): 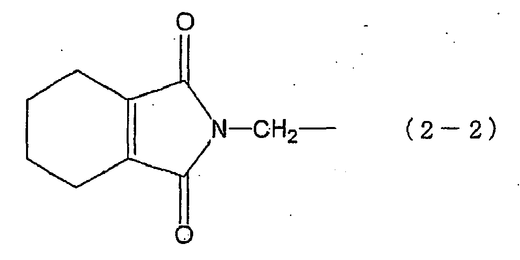
or a substituent represented by the formula (2-3) : 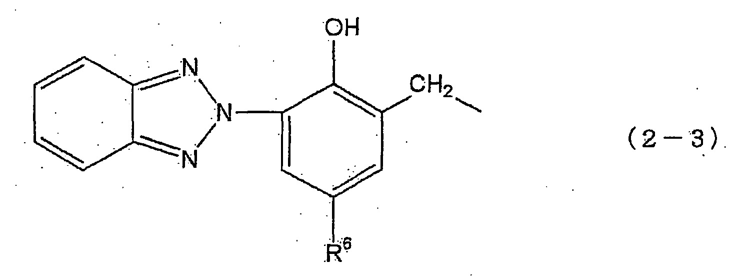 in which R⁶ represents a tert-octyl group or a substituent represented by the formula (2-1).

The multilayered light diffuser plate 10 of the present invention is useful as a light diffuser plate 1 constituting a backlight unit 4 using cold cathode fluorescent lamps 5 as light sources as shown in Fig. 2, since the plate 10 is hardly degraded with UV light.

Figs. 1A and 1B schematically show cross sectional views of the multilayered light diffuser plate 10 of the present invention. Fig. 1A shows one example of the multilayered light diffuser plate 10 of the present invention in which the UV absorbing layer 12 is laminated on one surface of the light diffusing layer 11, while Fig. 1B shows another example of the multilayered light diffuser plate 10 of the present invention in which UV absorbing layers 12 are laminated on both surfaces of the light diffusing layer 11.

Fig. 2 is a cross sectional view schematically illustrating the structure of a direct backlight LCD.

The transparent resin constituting the light diffusing layer 11 of the multilayered light diffuser plate 10 according to the present invention is at least one resin selected from the group consisting of styrene polymers and styrene monomer-methyl methacrylate copolymers. Commercially available transparent resins as such may be used. Among them, polystyrene is preferably used since it has low hygroscopicity.

Examples of the styrene polymer include homopolymers obtained by the polymerization of a single styrene monomer and copolymers obtained by the copolymerization of two or more styrene monomers. The styrene monomers may be unsubstituted or substituted styrenes. Examples of the substituted styrenes include halogenated styrenes such as chlorostyrene and bromostyrene, and alkyl styrenes such as vinyltoluene and α-methylstyrene.

The styrene monomer-methyl methacrylate copolymer is a styrene copolymer comprising the styrene monomer described above and methyl methacrylate. The copolymer usually comprises 20% by weight to 95% by weight of the styrene monomer unit and 80% by weight to 5% by weight of methyl methacrylate unit, preferably 70% by weight or more of the styrene monomer unit and 30% by weight or less of the methyl methacrylate unit.

The light diffusing agent comprises particles having a different refraction index from that of the transparent resin. It is able to diffuse transmitting light. Examples of the light diffuser include inorganic particles such as glass beads, silica particles, aluminum hydroxide particles, calcium carbonate particles, barium sulfate particles, titanium oxide particles and talc, and organic particles such as styrene polymer particles, acrylic polymer particles and siloxane polymer particles.

The diameter of the light diffusing agent is at least 1 µm, preferably at least 2 µm, more preferably at least 3 µm, in terms of a volume average particle diameter. The diameter is usually 25 µm or less, preferably 20 µm or less and more preferably 10 µm or less in order to prevent the formation of minute concave and convex portions due to the light diffusing agent particles on the surface of the light diffusing layer.

While the content of the light diffusing agent in the light diffusing layer 11 is not particularly limited, it is preferably in the range from 0.5 to 20 parts by weight per 100 parts by weight of the transparent resin.

The light diffusing layer may optionally contain any conventional additive such as a heat stabilizer, an antioxidant, a weather resistant agent, a light stabilizer, a fluorescent brightener and a reinforcing agent such as glass fiber in an amount such that the optical properties of the light diffusing layer are not impaired.

The styrene monomer-methyl methacrylate copolymer used in the UV absorbing layer 12 is the same copolymer of the styrene monomer and methyl methacrylate as described above in connection with the styrene polymer used in the light diffusing layer 11. The copolymer usually comprises 20 to 95% by weight of the styrene monomer unit and 80 to 5% by weight of methyl methacrylate unit, preferably 70% by weight or more of the styrene monomer unit and 30% by weight or less of methyl methacrylate unit.

Preferred examples of the UV absorbing agent represented by the formula (1) include the following compounds:
4,6-diphenyl-2-(4-hexyloxy-2-hydroxyphenyl)-s-triazine,
4,6-bis(biphenyl-4-yl)-2-(4-hexyloxy-2-hydroxyphenyl)-s-triazine,
4,6-bis(4-tert-butylphenyl)-2-(4-hexyloxy-2-hydroxyphenyl)-s-triazine,
4,6-bis(4-tert-octylphenyl)-2-(4-hexyloxy-2-hydroxyphenyl)-s-triazine,
4,6-bis(biphenyl-4-yl)-2-[(4-ethylhexyloxy)-2-hydroxyphenyl]-s-triazine,
4,6-bis(4-tert-butylphenyl)-2-[(4-ethylhexyloxy)-2-hydroxyphenyl]-s-triazine,
4,6-bis(4-tert-octylphenyl)-2-[(4-ethylhexyloxy)-2-hydroxyphenyl]-s-triazine, and
2-(4,6-diphenyl-1,3,5-triazin-2-yl)-5-[(hexyl)oxy]phenol (TINUVIN® 1577FF" manufactured by Ciba Specialty Chemicals, Inc.).

Preferred examples of the UV absorbing agent represented by the formula (2) include
2-(2-hydroxy-5-tert-octylphenyl)-2H-benzotriazole, 2-(3,5-bis-α-cumyl-2-hydroxyphenyl)-2H-benzotriazole (TINUVIN® 234 manufactured by Ciba Specialty Chemicals, Inc.),
2,2'-methylene-bis[4-tert-octyl-(6-2H-benzotriazol-2-yl)phenol] (ADEKASTAB® LA-31 manufactured by Asahi Denka Co.),
2-(2-hydroxy-3-α-cumyl-5-tert-octylphenyl)-2H-benzotriazole,
2-(2-hydroxy-3-tert-octyl-5-α-cumyl-phenyl)-2H-benzotriazole, and
N-[3-(2H-benzotriazol-2-yl)-2-hydroxy-5-methylbenzyl]-4,5,6,7-tetrahydrophthalimide (VIOSORB® 590 manufactured by Kyodo Chemical Co., Ltd.; SEESORB® 706 manufactured by Shipro Kasei Kaisha, Ltd.; and SUMISORB® 250 manufactured by Sumitomo Chemical Co., Ltd.).

The UV absorbing agents represented by the formula (1) and/or the formula (2) may be used independently, or as a mixture of two or more of them.

The content of the UV absorbing agent, per 100 parts by weight of the styrene monomer-methyl methacrylate copolymer in the UV absorbing layer 12, is at least 0.05 parts by weight, preferably at least 0.5 parts by weight from the viewpoint of preventing the resin from being degraded, and 10 parts by weight or less, preferably 3 parts by weight or less and more preferably 2 parts by weight or less from the viewpoint of avoiding the coloration of the resin caused by the UV absorbing agent.

The UV absorbing layer 12 may contain a light diffusing agent, a processing stabilizer and the like. Examples of the light diffusing agent are the same as those described in connection with the light diffusing layer 11.

The thickness of the UV absorbing layer 12 is usually 10 µm or more, preferably 30 µm or more from the viewpoint of preventing the layer from being degraded by the UV light, and is usually 100 µm or less from the viewpoint of avoiding the coloration of the layer caused by the UV absorbing agent.

The UV absorbing layer 12 may be laminated on one surface of the light diffusing layer 11 as shown in Fig. 1A, or may be laminated on both surfaces of the light diffusing layer 11 as shown in Fig. 1B.

The thickness of the light diffuser plate 10 of the present invention is usually from 1 mm to 3 mm.

Examples of the method for producing the light diffuser plate 10 include:
(1) a method comprising the step of co-extruding a resin composition containing the transparent resin and the light diffusing agent, and a resin composition containing the styrene monomer-methyl methacrylate copolymer and the UV absorbing agent;
(2) a method comprising the steps of molding a plate of a resin composition containing the transparent resin and the light diffusing agent, applying a solution containing the styrene monomer-methyl methacrylate copolymer and the UV absorbing agent dissolved in a solvent, and evaporating the solvent to form the UV absorbing layer 12; and
(3) a method comprising the steps of molding a plate of a resin composition containing the transparent resin and the light diffusing agent, forming a resin composition containing the styrene monomer-methyl methacrylate copolymer and the UV absorbing agent into a film, and bonding the film on the plate by heat-fusion.

Among them, the co-extrusion method is preferable since it can produce the light diffuser plate at low costs.

Since the multilayered light diffuser plate 10 of the present invention is hardly degraded by UV light, it is preferably used as the light diffuser plate 1 constituting the backlight unit 4 as shown in Fig. 2. The backlight unit 4 comprises the multilayered light diffuser plate 10 of the present invention and one or more cold cathode fluorescent lamps 5. In general, the multilayered light diffuser plate 10 of the present invention is located so that the UV absorbing layer 12 is present between the light diffusing layer 11 and the cold cathode fluorescent lamps 5. For example, when the multilayered light diffuser plate 10 has the UV absorbing layer 12 on one surface of the light diffusing layer 11, the light diffuser plate 10 is located so that the UV absorbing layer 12 is present on the side of the cold ray cathode tubes 5.

The backlight unit 4 is preferably used, for example, for the direct backlight LCD 2 as shown in Fig. 2. The direct backlight LCD 2 comprises the backlight unit 4 and a liquid crystal cell 3. Preferably, the liquid crystal cell 3 is capable of displaying a color image. The direct backlight LCD 2 comprises the multilayered light diffuser plate 10 which is provided between the liquid crystal cell 3 and the cold cathode fluorescent lamps 5. Consequently, the light diffuser plate 1 is hardly degraded by the UV light from the cold cathode fluorescent lamps 5 and thus the image displayed on the screen is less colored, even when the color LCD is used for a long time.

### EXAMPLES

Hereinafter, the present invention is described in detail with reference to the examples, which do not limit the scope of the present invention.

Evaluation methods in each example are as follows:

(1) Evaluation of optical properties (total light transmittance, diffused light transmittance, haze and spectral transmittance)

Total light transmittance, diffused light transmittance and haze were measured according to JIS K7136 respectively.

Yellowness YI, and chromaticity x and y were determined by measuring spectral transmittance in the wavelength range from 300 nm to 800 nm using an automatic recording spectrophotometer equipped with an integrating sphere (UV-4000 manufactured by Hitachi Ltd.).

(2) Mercury lamp irradiation test

The multilayered light diffuser plate 10 obtained was placed in an oven equipped with a mercury lamp, and the plate was irradiated with the mercury lamp at 75°C. The spectral transmittance of the plate was measured after irradiating for 500 hours and 1000 hours, and yellowness YI and chromaticity x and y were determined respectively to calculate the differences (ΔYI, Δx and Δy) before and after irradiation. The intensity of light emitted from the mercury lamp was from 0.3 to 0.5 mW/cm² at 365 nm and from 0.9 to 1.2 mW/cm² at 405 nm.

(3) Luminance

The multilayered light diffuser plate 10 obtained was cut into two rectangular plates each having a size of 163 mm (TD) and 423 mm (MD), and the plates were joined together with chloroform to obtain a single plate having a size of 423 mm x 326 mm. The joined plate was mounted as the light diffuser plate 1 on a 20 inch type direct backlight unit 4 (screen size: 423 mm (width) x 326 mm (length)) provided with the cold cathode fluorescent lamps 5. Luminance was measured at 441 points using a multipoint luminance meter while turning the cold cathode fluorescent lamps 5 on, and the measured values were averaged.

Example 1: Production of light diffusing agent master batch

0.03 Parts by weight of an oxazole fluorescent brightener (WHITEFLUOR PSN conc. manufactured by SUMIKA COLOR Co., Ltd.) were added to a mixture of 46 parts by weight of polystyrene (TOYO STYROL HRM 40 manufactured by Toyo Styrene Co., Ltd.; MFR (melt flow rate) = 0.9 to 1.3 g/10 minutes), 40 parts by weight of cross-linked acrylic resin particles (SUMIPEX XC1A manufactured by Sumitomo Chemical Co., Ltd.), 4 parts by weight of silicone resin particles (DY33-719 manufactured by Toray Dow Corning Co.), 8 parts by weight of a UV absorbing agent (dimethyl(p-methoxybenzylidene) malonate) (HOSTAVIN PR-25 manufactured by Clariant), and 2 parts by weight of a processing stabilizer (2,6-di-tert-butyl-4-methylphenol) (YOSHINOX BHT manufactured by API Co., Ltd.). Then, the mixture was dry blended and pelletized by extrusion with a twin-screw extruder with a diameter of 65 mm at 80°C to 250°C to obtain pellets of a light diffusing agent master batch.

Production of UV absorbing agent compound

100 parts by weight of a styrene-methyl methacrylate copolymer (ESTYRENE MS200NT manufactured by Shin-Nittetsu Chemical Co., Ltd.; MFR = 1.3 to 1.9 g/10 minutes; styrene unit: 80% by weight; methyl methacrylate unit: 20% by weight), 23 parts by weight of cross-linked acrylic resin particles (SUMIPEX XC1A manufactured by Sumitomo Chemical Co., Ltd.), 0.2 parts by weight of a processing stabilizer (SUMILIZER GP manufactured by Sumitomo Chemical Co., Ltd.) and 1.5 parts by weight of a UV absorbing agent (2-(4,6-diphenyl-1,3,5-triazine-2-yl)-5-[(hexyl)oxy]phenol) (TINUVIN 1577FF manufactured by Ciba Specialty Chemicals, Inc.) were dry blended, and the blend was pelletized using a single-screw extruder with a diameter of 20 mm at 200°C to 230°C to obtain pellets of a UV absorbing agent compound.

Production of multilayered light diffuser plate

92 parts by weight of polystyrene (TOYO STYROL HRM 40) and 8 parts by weight of the light diffusing agent master batch obtained above were dry blended, and then supplied to an extruder with a screw diameter of 40 mm to melt the blend at 200°C to 235°C while keeping the pressure of a vent portion at 5.3 kPa (absolute pressure). Separately, the UV absorbing agent compound obtained above was supplied to an auxiliary extruder having a screw diameter of 20 mm, and was molten at an extruder temperature of 190°C to 230°C while keeping the pressure of a vent portion at 21.3 kPa (absolute pressure). The molten polystyrene containing the light diffusing agent master batch and the molten UV absorbing agent compound were coextruded at a T-die temperature of 245°C to 250°C via a feed block and the T-die, and a multilayered light diffuser plate 10 with a width of about 220 mm was obtained as a three layer plate having UV absorbing layer 12 (0.05 mm)/light diffusing layer 11 (1.9 mm)/UV absorbing layer 12 (0.05 mm).

Evaluation

The multilayered light diffuser plate 10 obtained was cut into a size of 65 mm × 65 mm, and the initial optical properties of the plate 10 (total light transmittance, diffused light transmittance, haze and spectral transmittance) were determined. Thereafter, the plate was subjected to the mercury lamp irradiation test. The results are shown in Table 1.

Luminance of the multilayered light diffuser plate 10 obtained was also evaluated. The results are shown in Table 1.

Example 2

A multilayered light diffuser plate was produced by the same method as in Example 1, except that 1.6 parts by weight of a UV absorbing agent (2,2'-methylene-bis[4-tert-octyl-(6-2H-benzotriazol-2-yl)phenol]) (ADEKASTAB LA-31 manufactured by Asahi Denka Co.) were used in place of the UV absorbing agent, TINUVIN 1577FF. The results of the evaluation are shown in Table 1.

Example 3

A multilayered light diffuser plate was produced by the same method as in Example 1, except that 2 parts by weight of a UV absorbing agent (2-(3,5-bis-α-cumyl-2-hydroxyphenyl)-2H-benzotriazole) (TINUVIN 234 manufactured by Ciba Specialty Chemicals, Inc.) were used in place of the UV absorbing agent, TINUVIN 1577FF. The results of the evaluation are shown in Table 1.

Example 4

A multilayered light diffuser plate was produced by the same method as in Example 1, except that 1.8 parts by weight of UV absorbing agent)N-[3-(2H-benzotriazol-2-yl)-2-hydroxy-5-methylbenzyl]-4,5,6,7-tetrahydrophthalimide) (VIOSORB 590 manufactured by Kyodo Chemical Co., Ltd.) were used in place of the UV absorbing agent, TINWIN 1577FF. The results of the evaluation are shown in Table 1.

Comparative Example 1

A multilayered light diffuser plate was produced by the same method as in Example 1, except that 0.5 parts by weight of UV absorbing agent (2-(2H-benzotriazole-2-yl)-p-cresol) (TINUVIN P manufactured by Ciba Specialty Chemicals, Inc.) were used in place of the UV absorbing agent, TINUVIN 1577FF. The results of the evaluation are shown in Table 1.

Comparative Example 2

A multilayered light diffuser plate was produced by the same method as in Example 1, except that 1 part by weight of UV absorbing agent (dimethyl(p-methoxybenzylidene) malonate) (HOSTAVIN PR-25 manufactured by Clariant Co.) was used in place of the UV absorbing agent, TINUVIN 1577FF. The results of the evaluation are shown in Table 1.

Comparative Example 3

A multilayered light diffuser plate was produced by the same method as in Example 1, except that UV absorbing agent THT 4611 (a mixture of 10% by weight of a triazine UV absorbing agent and 90% by weight of a hindered amine stabilizer; manufactured by Cytec Industry Co.) was used in place of the UV absorbing agent, TINUVIN 1577FF. The results of the evaluation are shown in Table 1.

**Table 1**

| | Example No. | | | | Comp. Example No. | | |
|---|---|---|---|---|---|---|---|
| | 1 | 2 | 3 | 4 | 1 | 2 | 3 |
| Thickness (mm) | 2.1 | 2.1 | 2.0 | 2.1 | 2.1 | 2.1 | 2.1 |

| Initial optical properties | | | | | | | |
|---|---|---|---|---|---|---|---|
| Total light transmittance (%) | 57 | 57 | 56 | 58 | 56 | 56 | 57 |
| Diffused light transmittance (%) | 57 | 56 | 56 | 57 | 56 | 56 | 56 |
| Haze | 99 | 99 | 99 | 99 | 100 | 99 | 99 |
| YI | 3.1 | 2.3 | 2.0 | 3.6 | 3.1 | 1.6 | 3.1 |
| Chromaticity x | 0.313 | 0.312 | 0.312 | 0.314 | 0.313 | 0.312 | 0.313 |
| Chromaticity y | 0.318 | 0.318 | 0.317 | 0.319 | 0.318 | 0.317 | 0.318 |

| Mercury lamp irradiation test | | | | | | | |
|---|---|---|---|---|---|---|---|
| After 500 hours | | | | | | | |
| ΔYI | 0.2 | 0.7 | 0.0 | -0.8 | 1.3 | 7.5 | 3.5 |
| Δx | 0.000 | 0.000 | 0.000 | 0.000 | 0.001 | 0.006 | 0.003 |
| Δy | 0.000 | 0.001 | 0.000 | 0.000 | 0.002 | 0.010 | 0.005 |

| After 1000 hours | | | | | | | |
|---|---|---|---|---|---|---|---|
| ΔYI | 0.3 | 1.0 | 0.6 | -0.1 | 2.5 | 8.7 | 4.2 |
| Δx | 0.000 | 0.001 | 0.000 | 0.000 | 0.002 | 0.007 | 0.003 |
| Δy | 0.001 | 0.001 | 0.001 | 0.000 | 0.004 | 0.012 | 0.006 |
| Luminance evaluation | 3500 | 3480 | 3420 | 3440 | 3430 | 3460 | 3500 |

## Claims

1. A multilayered light diffuser plate comprising a light diffusing layer made of at least one transparent resin selected from the group consisting of styrene polymers and styrene monomer-methyl methacrylate copolymers containing a light diffusing agent dispersed therein, and a UV absorbing layer made of a styrene monomer-methyl methacrylate copolymer containing 0.05 to 10 parts by weight of at least one UV absorbing agent selected from the group consisting of a UV absorbing agents represented by the formula (1) and a UV absorbing agents represented by the formula (2) per 100 parts by weight of the styrene monomer-methyl methacrylate copolymer: 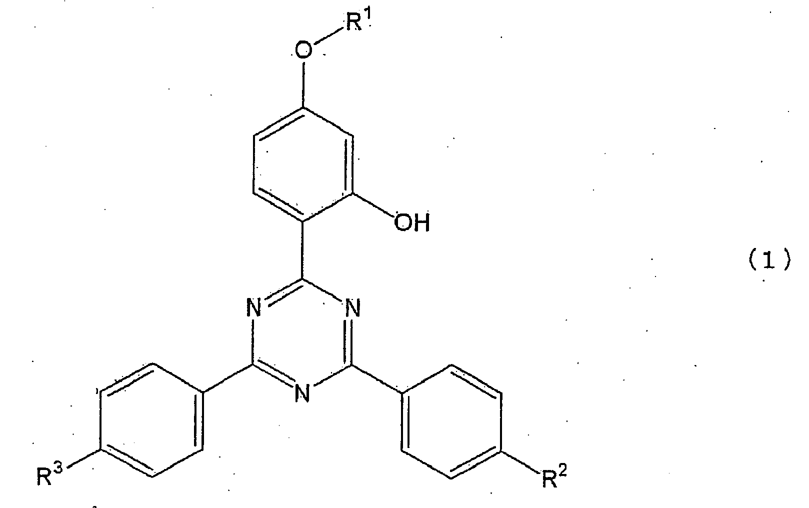 wherein R¹ represents an alkyl group having 10 or less carbon atoms, and R² and R³ represent independently of each other a hydrogen atom, a tert-butyl group, a tert-octyl group or a phenyl group; and 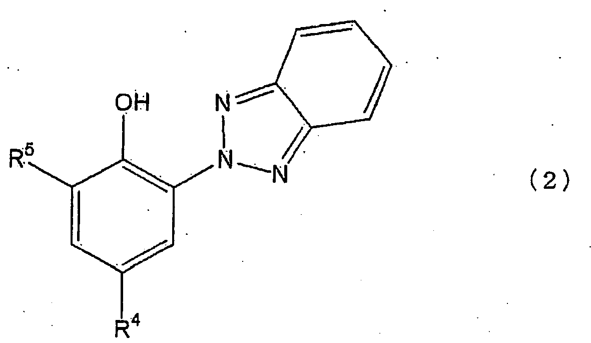 wherein R⁴ represents a methyl group, a tert-octyl group or a substituent represented by the formula (2-1): 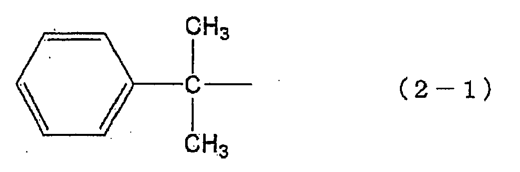
R⁵ represents a tert-octyl group, a substituent represented by the formula (2-1), a substituent represented by the formula (2-2): 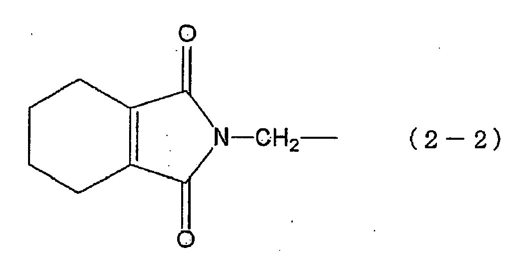
or a substituent represented by the formula (2-3): 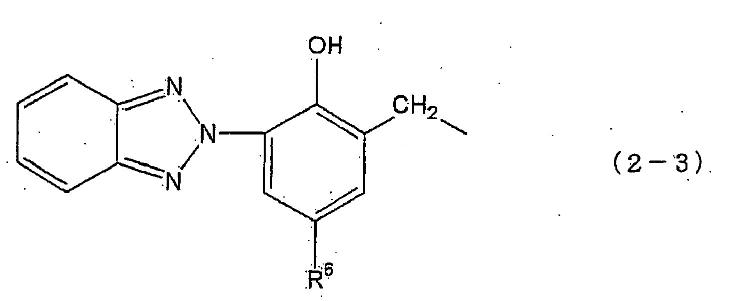
in which R⁶ represents a tert-octyl group or a substituent represented by the formula (2-1).

2. The multilayered light diffuser plate according to claim 1, wherein the UV absorbing layer has a thickness of 10 µm to 100 µm.

3. The multilayered light diffuser plate according to claim 1, which has a thickness 1 mm to 3 mm.

4. A backlight unit comprising a multilayered light diffuser plate according to any of claims 1 to 3 and at least one cold cathode ray tube, wherein the multilayered light diffuser plate is placed so that the UV absorbing layer of the multilayered light diffuser plate is present between the light diffusing layer and the cold cathode fluorescent lamp(s).

5. A direct backlight liquid crystal display comprising a backlight unit according to claim 4 and a liquid crystal cell, wherein the multilayered light diffuser plate is present between the liquid crystal cell and the cold cathode fluorescent lamps.
